# EUROPÄISCHE PATENTSCHRIFT

(11) **EP 0 471 167 B1**
(45) Veröffentlichungstag und Bekanntmachung des Hinweises auf die Patenterteilung: **25.05.1994**
(21) Anmeldenummer: 91110018.8
(22) Anmeldetag: 19.06.1991
(51) Int. Cl.: H01T 1/14, H02H 9/04

(54) **Schutzschaltung und Schutzstecker in Telekommunikationsanlagen**
Protective circuit and protective module for telecommunication devices
Circuit de protection et module de protection pour dispositifs de télécommunication

(30) Priorität: 14.08.1990 DE 4026004
(43) Veröffentlichungstag der Anmeldung: 19.02.1992
(73) Patentinhaber: KRONE Aktiengesellschaft, D-14167 Berlin (DE)
(72) Erfinder: Achtnig, Klaus-Peter, W-1000 Berlin 45 (DE); Hönl, Robert, Dr., W-1000 Berlin 31 (DE)

(56) Entgegenhaltungen:
- EP-A- 0 183 542
- EP-A- 0 327 359
- DE-A- 3 831 935
- FR-A- 2 455 381
- FR-A- 2 600 465
- GB-A- 2 172 453

## Beschreibung

Die Erfindung bezieht sich auf eine Schutzschaltung zum Schutz eines Verbrauchers vor Überspannung und Überstrom, insbesondere für Telekommunikationsanlagen, gemäß dem Oberbegriff des Anspruches 1.

Aus der FR-A-2 455 381 ist eine Schutzschaltung zum Schutz eines Verbrauchers vor Überspannung und Überstrom bekannt. Die Schutzschaltung weist zwischen zwei parallel liegenden Leitungen einen Querpfad auf, der ein Überspannungsschutzelement und ein auf das Überspannungsschutzelement einwirkendes Thermoschutzelement aufweist. In der einen Leitung ist darüber hinaus ein Sicherungselement vor dem Querpfad angeordnet. Der Nachteil dieser Anordnung besteht darin, daß durch die Anordnung der Sicherung vor dem Querpfad die Sicherung bei Stoßströmen zerstört wird, weil die Stoßströme über die Sicherung gehen. Die Stoßströme werden nicht über den Ableiter auf die Erde abgeleitet, da der Ableiter nicht ansprechen kann.

Aus der DE-A-38 31 935 ist eine Schutzschaltung vorbekannt, die ebenfalls eine Sicherung in der Kabelader und einen dieser nachgeordneten Querpfad zwischen Kabelader und Erdleiter aufweist, der aus einem Überspannungableiter und einem damit wärmemäßig gekoppelten Thermo-Schutzelement besteht. Eine zu hohe thermische Belastung des Überspannungsableiters führt zu einem Ansprechen des Thermo-Schutzelementes, das daraufhin den Querpfad auftrennt. Bei anhaltender Strombelastung unterbricht die Sicherung die Stromleitung. Dadurch ist die Systemseite nicht mehr vor auftretenden kurzen Überspannungen geschützt, sofern die Sicherung nicht auslöst, und ist andererseits bis zum Auslösen der Sicherung mit dem Überstrom belastet. Die Sicherung muß daher stoßstromfest sein, was ein großes Volumen bedingt. Nach einem Ansprechen des Thermo-Schutzelementes und dem darauffolgenden, eventuellen Auslösen der Sicherung befindet sich der Eingang der Systemseite nicht mehr auf einem definierten Potential, so daß eine Zerstörung empfindlicher Bauelemente nicht auszuschließen ist.

Aus der EP-A-0 327 359 ist eine Schutzschaltung mit einem Überspannungsquerpfad mit Thermoschutz und eine hinter diesem Querpfad angeordnete Sicherung bekannt. Diese Sicherung hat jedoch nur die Funktion einer Feinsicherung (schützt Systemseite), da im Kurzschlußfall die Sicherung nicht zur Funktion kommt und die hohen Ströme nur über die Kurzschlußbrücke abfließen können. Es besteht somit eine Brandgefahr auf der Linienseite.

Der Erfindung liegt von daher die Aufgabe zugrunde, eine Schutzschaltung zum Schutz vor Überspannung und Überstrom zu schaffen, die den Überspannungsableiter vor zu hoher thermischer Belastung schützt und die Stromleitung in einer für die Systemseite sicheren Weise bei zu hoher Strombelastung abschaltet, ohne daß eine Brandgefahr besteht.

Die Lösung dieser Aufgabe ergibt sich aus den kennzeichnenden Merkmalen des Anspruches 1. Eine weitere Lösung der gleichen Aufgabe ergibt sich aus den kennzeichnenden Merkmalen des nebengeordneten Anspruches 2. Die Schutzschaltung umfaßt eine in die Stromleitung geschaltete Sicherung, einen zwischen die Stromleitung und die Erdleitung geschalteten, mit einem Thermo-Schutzelement versehenen Überspannungsableiter und einen bezüglich der Richtung Linienseite-Systemseite hinter der Sicherung angeordneten Kurzschluß-Querpfad, der im Betriebszustand offen ist. Durch zu lange anhaltende Überspannung erwärmt sich der Überspannungsableiter und löst dadurch das Thermo-Schutzelement aus. Dieses unterbricht den Querpfad des Überspannungsableiters und schließt gleichzeitig den Kurzschluß-Querpfad hinter der Sicherung, so daß die Stromleitung nachfolgend durch die Sicherung unterbrochen werden kann. Aufgrund des Kurzschluß-Querpfades liegt der Eingang der Systemseite somit auf einem definierten Potential, nämlich dem Erdpotential.

Bei einer unzulässig hohen Strombelastung, die z. B. bei einer Überspannung in der Stromleitung auftreten kann, ohne daß der Überspannungsableiter zündet, wird die Stromleitung unterbrochen. Da in diesem Fall das Thermo-Schutzelement nicht anspricht, wird der Kurzschluß-Querpfad nicht geschlossen, so daß auch hier keine Brandgefahr durch zu hohe Ströme in der Kurzschlußleitung besteht.

Da der Abzweig des Querpfades des Überspannungsableiters bezüglich der Richtung Linienseite-Systemseite vor der Sicherung angeordnet ist, wird die Sicherung bei Stromstößen nicht belastet und kann klein gehalten werden. Bei einem Ansprechen des Thermo-Schutzelementes wird der Kurzschluß-Querpfad hinter der Sicherung geschlossen, so daß diese bei entsprechend hohen Strömen die Stromleitung öffnet. Da das Ansprechen des Thermo-Schutzelementes ein Öffnen des Querpfades des Überspannungsableiters bewirkt, wird ein erneutes Zünden des Überspannungsableiters verhindert.

Die Lösung der Aufgabe gemäß Anspruch 2 ergibt eine Schutzschaltung, bei der der Querpfad des Überspannungsableiters mit dem Thermo-Schutzelement und der Kurzschluß-Querpfad bezüglich der Richtung Linienseite-Systemseite hinter der Sicherung angeordnet sind, wobei die Sicherung mit einem Kurzschluß überbrückt ist, der beim Abtrennen des Querpfades des Überspannungsableiters aufgetrennt wird. Hierbei wird ebenfalls die Stoßstrombelastung von der Sicherung ferngehalten. Diese befindet sich vor dem Abzweig des Überspannungsableiters und des offenen Kurzschluß-Querpfades und ist mit einem Kurzschluß-Schalter parallel überbrückt, so daß sie im Betriebsfall nur von dem geringeren Teil des Stromes durchflossen wird. Das Auslösen des Thermo-Schutzelementes führt zu einem Öffnen des die Sicherung überbrückenden Kurzshlusses und zu einem Schließen des Kurzschluß-Querpfades zwischen Stromleitung und Erdleitung, so daß die Sicherung aktiviert wird.

Gemäß den Merkmalen des Anspruches 3 ist die Schutzschaltung zur Sicherung zweier Stromleitungen einer Doppelader symmetrisch verdoppelt, wobei beim Ansprechen eines Thermo-Schutzelementes über einen gemeinsamen Umschalter beide Überspannungsableiter vor der Erdleitung abgetrennt und beide Kurzschluß-Querpfade geschlossen werden. Hierbei ist die Schutzschaltung in einer, in der Telekommunikation üblichen Doppelader eingesetzt. Jeweils zwischen einer der beiden Stromleitungen und der gemeinsamen Erdleitung ist die Schutzfunktion derart realisiert, daß beim Ansprechen nur eines Thermo-Schutzelementes die gemeinsame Sicherungsfunktion ausgelöst wird, beide Überspannungsableiter von der Erdleitung abgekoppelt und beide Kurzschluß-Querpfade geschlossen werden. Statt zweier getrennter Überspannungsableiter kann auch ein Dreipol-Überspannungsableiter eingesetzt werden.

Gemäß den Merkmalen des Anspruches 4 ist die Schutzschaltung um einen Feinschutz erweitert, so daß gemäß VDE 0845, Teil 1, Oktober 1987 ein Stufenschutz in Grob- und Feinschutz erzielt wird. Dabei umfaßt der Feinschutz gemäß den Merkmalen des Anspruches 5 einen PTC-Widerstand und einen Varistor, die wärmemäßig eng gekoppelt sind. Derartige Vorrichtungen sind aus der DE-OS 32 31 066 bereits vorbekannt. Ein derartiger Feinschutz ermöglicht den Schutz vor schnellen transienten Vorgängen und vor Überspannungen und -strömen, dei denen der Grobschutz nicht anspricht. Der spannungsabhängige Widerstand (Varistor) gewährleistet die Spannungsbegrenzung auf dem gewünschten Maximalpegel und arbeitet bauelementebedingt sehr schnell mit Ansprechzeiten im Nano-Sekunden-Bereich. Der temperaturabhängige PTC-Widerstand (PTC = Positive-Temperature-Coefficient) im Längszweig dient zur Entkoppelung zwischen der Spannungsbegrenzung im Grobschutz und derjenigen im Feinschutz. Ferner dient der PTC-Widerstand zur zeitlichen Begrenzung von Strömen, die größer als die üblichen und zulässigen Betriebsströme durch die Eigenerwärmung des Kaltleiters infolge des fließenden Stromes sind. Schließlich dient der PTC-Widerstand dem Überlastschutz der Spannungsbegrenzung im Feinschutz (Varistor), einerseits durch die Eigenerwärmung des PTC-Widerstandes durch den fließenden Strom mit der daraus resultierenden Widerstandserhöhung und andererseits durch die Widerstandserhöhung aufgrund der Erwärmung des PTC-Widerstandes durch die thermische Kopplung des PTC-Widerstandes mit dem Varistor.

Die Anordnung einer Meß- und Trennstelle hinter dem Stufenschutz gemäß den Merkmalen des Anspruches 6 erlaubt eine teilweise Prüfung der Funktionen der Schutzschaltung und der Stromleitung mit eingebauter Schutzschaltung. Im Telekommunikationsbereich ist es besonders vorteilhaft, derartige Schutzschaltungen als Schutzstecker auszubilden.

Weitere vorteilhafte Ausgestaltungen der Erfindung, insbesondere der Ausgestaltung der Schutzschaltung als Schutzstecker ergeben sich aus den Unteransprüchen.

Die Erfindung ist nachfolgend anhand mehrerer Ausführungsformen von in den Zeichnungen näher dargestellten Schutzschaltungen und einer in den Zeichnungen dargestellten Ausführungsform eines Schutzsteckers näher erläutert.

Es zeigen:
- Fig. 1: das Schaltbild der ersten Ausführungsform der mit einer nachgeordneten Sicherung für den Einsatz in Doppeladern ausgebildeten Schutzschaltung im Betriebszustand,
- Fig. 2: die Schutzschaltung gemäß Fig. 1 im ausgelösten Zustand,
- Fig. 3: das Schaltbild der zweiten Ausführungsform der Schutzschaltung mit vorgeschalteter, überbrückter Sicherung,
- Fig. 4: das Schaltbild der dritten Ausführungsform der Schutzschaltung als Stufenschutz mit Meß- und Trennstelle,
- Fig. 5: das Schaltbild des Stufenschutzes,
- Fig.5a: das Schaltbild der vierten Ausführungsform der Schutzschaltung,
- Fig. 6: einen Längsschnitt durch den Schutzstecker,
- Fig. 7: die Draufsicht auf die Leiterplatte des Schutzsteckers,
- Fig. 8: einen Querschnitt durch den Schutzstecker längs der Linie A-B in Fig. 6,
- Fig. 9: einen Querschnitt des Schutzsteckers längs der Linie C-D in Fig. 6,
- Fig. 10: eine Untersicht des Schutzsteckers bei abgenommener Leiterplatte,
- Fig. 11: eine Draufsicht auf den Schutzstecker,
- Fig. 12: die Seitenansicht einer Anschlußleiste der Telekommunikation mit fünf aufgesteckten Schutzsteckern, angesetzter Erdschiene und aufgestelltem Signalbügel zur Auslösung durch die Signalisierungsnasen der Schutzstecker,
- Fig. 13: eine Stirnansicht der Anschlußleiste mit aufgesteckten Schutzsteckern und Signalbügel im nicht abgeklappten Zustand und
- Fig. 14: eine der Fig. 13 entsprechende Stirnansicht mit abgeklapptem Signalbügel.

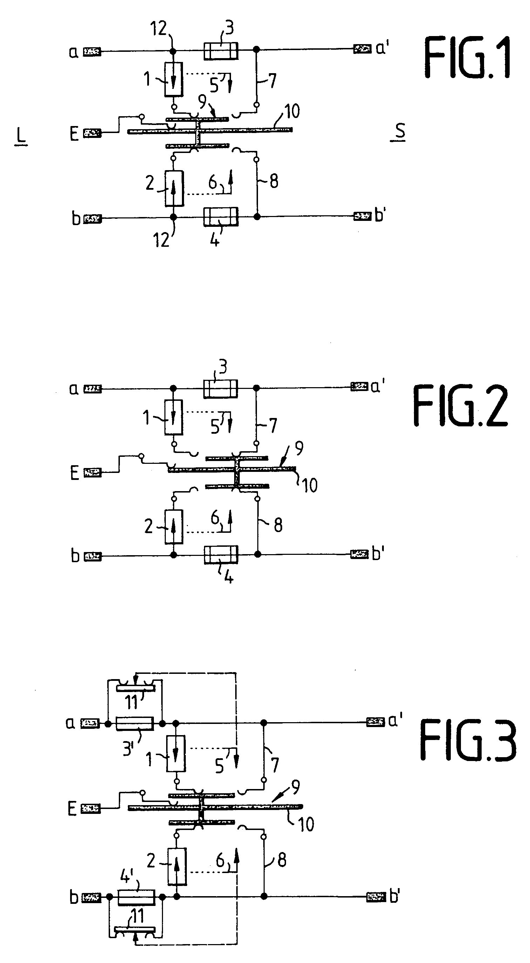

Die Fig. 1 zeigt eine Schutzschaltung, die in die Anschlüsse a-a′ und b-b′ zwischen Linienseite L und Systemseite S geschaltet ist, wobei ein gemeinsamer Erdleiter E zur Ableitung von Überströmen vorgesehen ist, welche durch auf das Erdpotential bezogene Überspannungen hervorgerufen sind. Die Schutzschaltung umfaßt zwei Überspannungsableiter 1,2 die als Querpfade zwischen die Anschlüsse a und E bzw. b und E geschaltet sind und Sicherungen 3,4 die hinter den Abzweigen 12 der Überspannungsableiter 1, 2 in die Verbindungsleitungen zwischen den Anschlüssen a,a` bzw. b,b′ eingeschaltet sind. Die Überspannungsableiter 1,2 werden von Thermo-Schutzelementen 5,6 thermisch überwacht. Die Fig. 1 zeigt die Schutzschaltung im Betriebszustand, d.h. die Überspannungsableiter 1,2 kontaktieren einen Umschalter 9, der über eine Basis 10 mit der Erdleitung E verbunden ist. Die Kurzschluß-Querpfade 7,8 sind geöffnet und im Betriebszustand nicht mit dem Umschalter 9 verbunden. Auftretende Überspannungen, deren Zeitdauer zum Zünden des Überspannungsableiters 1 oder 2 ausreicht, werden über diese mit dem resultierenden Überstrom auf Erde E geleitet. Die Sicherungen 3,4 werden daher nicht mit den Stoßströmen belastet.

In der Fig. 2 ist die Schutzschaltung gemäß der Fig. 1 bei ausgelöster Sicherungsfunktion dargestellt. Eine zu große thermische Belastung eines der Überspannungsableiter 1,2 d.h. eine zu große Strombelastung löst das entsprechende Thermo-Schutzelement 5 bzw. 6 aus und bewirkt ein Umschalten des gemeinsamen Umschalters 9. Dies ist hier durch dessen Verschiebung nach rechts dargestellt. Dadurch werden die Kurzschluß-Querpfade 7,8 auf die Erdleitung E gelegt und geschlossen. Die Querpfade der Überspannungsableiter 1,2 werden aufgetrennt. Die Sicherungen 3,4 sind jetzt aktiviert und können die Stromlinien zwischen den Anschlüssen a,a′ und b,b′ auftrennen. Die Anschlüsse a′,b′ der Systemseite S liegen nun auf einem definierten Potential, nämlich dem Erdpotential, so daß sowohl ein Personenschutz als auch ein Schutz empfindlicher Elektronik auf der Systemseite S gewährleistet ist. Eine durch die Schutzschaltung sonst möglicherweise auslösbare Brandgef ahr ist ebenso vermieden.

Die Fig. 3 zeigt die weitere Ausführungsform der Schutzschaltung mit einer Veränderten Anordnung der Sicherungen 3′,4′. Eine Sicherung 3′ ist in der Leitungsverbindung zwischen den Anschlüssen a,a′ vor dem Querpfad des Überspannungsableiters 1 angeordnet. Der nachgeordnete Kurzschluß-Querpfad 7 ist im Betriebszustand offen, während der Querpfad des Überspannungsableiters 1 den Umschalter 9 kontaktiert, der mit der Erdleitung E verbunden ist. Die Sicherung 3′ ist kurzgeschlossen, wobei in diesem Kurzschluß ein geschlossener Schalter 11 angeordnet ist. Das Thermo-Schutzelement 5 wirkt auf den Umschalter 9 und den Schalter 11 in der Weise ein, daß ein Auslösen des Thermo-Schutzelentes 5 ein Öffnen des Querpfades des Überspannungsableiters 1 und ein Schließen des Kurzschluß-Querpfades 7 bewirkt. Gleichzeitig wird der Schalter 11 in dem Kurzschluß der Sicherung 3′ geöffnet, so daß die Sicherung 3′ über den Kurzschluß-Querpfad 7 aktiviert wird.

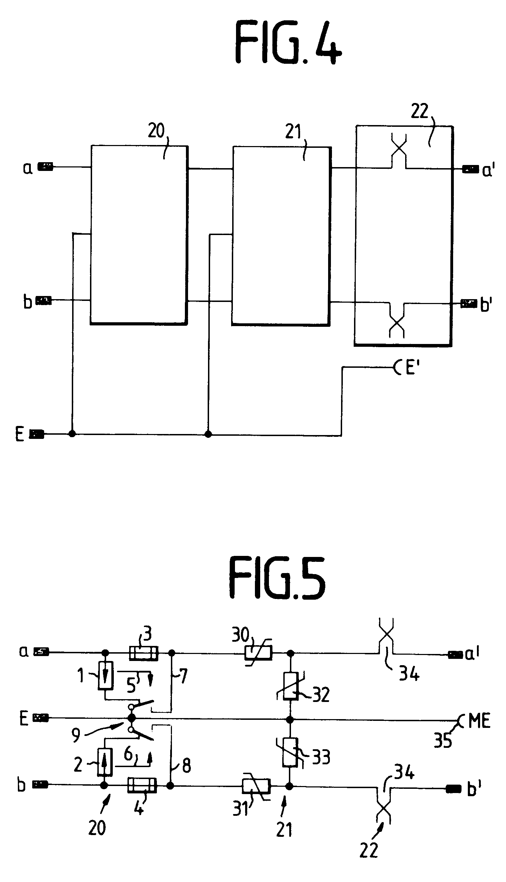

Die Aufteilung der Schutzschaltung in einen Grobschutz 20 und einen Feinschutz 21 in Form eines Stufenschutzes zeigt die Schutzschaltung nach Fig. 4. Dieser Stufenschutz ist durch eine nachgeordnete Meß-und Trennstelle 22 erweitert.

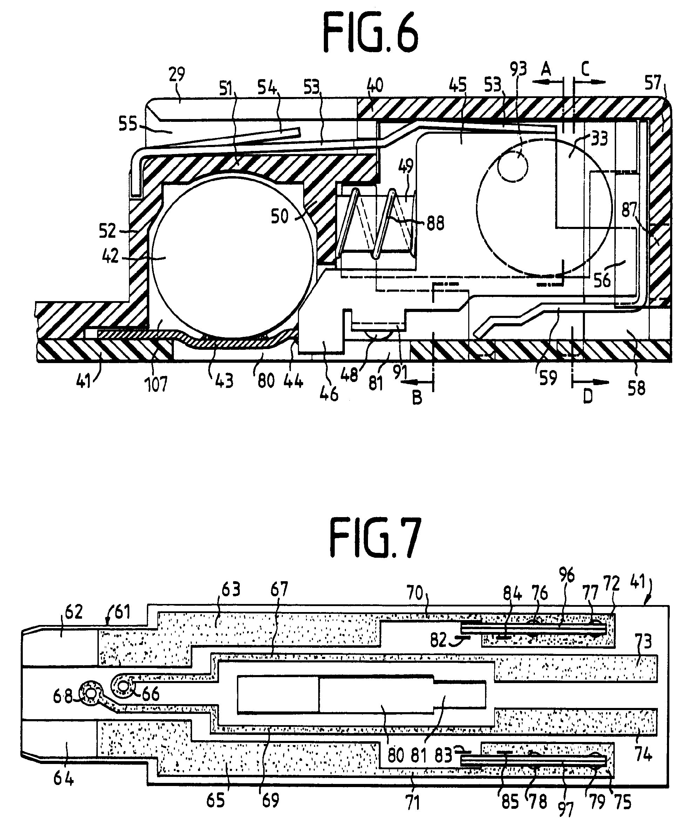

Die Fig. 5 zeigt eine weitere Ausführungsform des Staffelschutzes mit Meß- und Trennstelle 22. In die Doppelader der Leitungsverbindung zwischen den Anschlüssen a,a′ und b,b′ mit dem Erdleiter E sind der Grobschutz 20, der nachfolgende Feinschutz 21 und den nachfolgenden, in jeder Leitungsverbindung befindlichen Meß- und Trennstellen 22 geschaltet. Der Grobschutz 20 ist aus den Querpfaden mit den Überspannungsableitern 1, 2, den nachfolgenden, in die Leitungsverbindungen geschalteten Sicherungen 3, 4, den Kurzschluß-Querpfaden 7,8, den Thermo-Schutzelementen 5,6 und dem gemeinsamen Umschalter 9 gebildet. Der nachfolgende Feinschutz 21 besteht aus den in die jeweilige Leitungsverbindung geschalteten PTC-Widerständen 30,31 und den darauf folgenden Varistoren 32,33, die parallel zwischen die jeweilige Leitungsverbindung zwischen den Anschlüssen a,a′ und b,b′ und dem Erdleiter E geschaltet sind.

Das Erdpotential ist als weitere Meßstelle 35 herausgeführt, so daß Potentialmessungen zwischen den Meß- und Trennstellen 34 und der Meßstelle 35 für das Erdpotential möglich sind.

Die Fig. 5a zeigt eine weitere Ausführungsform der Schutzschaltung mit einer Signalisierungseinrichtung. Die Schutzschaltung umfaßt einen Dreipol-Überspannungsableiter 1′ zwischen den Leitungsverbindungen der Anschlüsse a,a′ und b,b′, wobei die Mittelelektrode 13 mit dem als Schieber 45 ausgebildeten, auf Erdpotential liegenden Umschalter 9 über einen Schleifkontakt 14 in Verbindung steht. Die Sicherungen 3,4 sind hinter den Querpfad des Dreipol-Überspannungsab- leiters 1′ in die Leitungsverbindungen eingesetzt. Die Thermo-Schutzelemente 5,6 und die Kurzschluß-Querpfade 7,8 sind in gleicher Bauweise vorhanden, wie bei den vorangegangenen Ausführungsformen. Der Erdleiter E liegt über einen Schleifkontakt 15 am Umschalter 9 an. Schließlich sind in den Leitungsverbindungen zwischen den Anschlüssen a,a′ und b,b′ die Meß- und Trennstellen 34 vorhanden.

Am Ende des Umschalters 9 ist ein Kontaktgeber 16 montiert, dessen Anschlußleitung 17 mit weiteren Schutzsteckern 99 verbunden sein kann und zu einem elektronischen Signalgeber 18 führt, der über einen Widerstand 19 an eine Leitung 24 angeschlossen ist, in der ein Signalgeber 25 für ein ein zentrales Signal und eine Amtsbatterie 26 eingeschaltet sind. Die Schutzschaltung ermöglicht eine zentrale Signalisierung, ob ein Schutzstecker 99 in einem Schutzfeld, z.B. eines Hauptverteilers der Kommunikationstechnik ausgelöst hat. Das freie Ende des Umschalters 9 dient hierbei als Signalisierungsnase 56, die bei ausgelöstem Schutzstecker 99 in Kontakt mit dem Kontaktgeber 16 kommt und ebenfalls das Erdpotential annimmt. Wenn dadurch der Stromkreis über den lokalen Signalgeber 18 geschlossen wird, kann dadurch zentral, am Rahmen des Hauptverteilergestelles oder in einem Feld, gegebenenfalls auch an einer Anschlußleiste 89 mittels einer Lampe, LED, Summer oder irgendeinem anderen Signalisierungselement die Auslösung des Schutzsteckers 99 angezeigt werden. Die Kontaktgabe muß nicht von Dauer sein und kann eine Art Triggerfunktion besitzen. Gegebenenfalls ist die Stromversorgung der Signalisierungseinrichtung über einen DC/DC-Wandler durchzuführen, da die Schutzerde ein hohes Potential annehmen kann. Über Schnittstellen zu zählenden Systemen können stark belastete Stromleitungen, d.h. solche mit häufiger Auslösung, herausgefunden werden.

Die Fig. 6 zeigt einen mittleren Längsschnitt durch einen als Miniaturstecker ausgebildeten Schutzstecker 99 mit Schutzschaltung, die als Stufenschutz mit Meß- und Trennstelle 22 ausgeführt ist. Der Miniaturstecker findet seine Anwendung vor allem in Telekommunikationsanlagen.

Ein äußeres Gehäuse 40, dessen Unterseite von einer Leiterplatte 41 gebildet ist, enthält einen Dreipol-Überspannungsableiter 42, dessen Mittelelektrode 13 auf einem Blechteil 43 kontaktierend aufliegt. Ein derartiger dreipoliger Überspannungsableiter 42 enthält eine linke und eine rechte Außenelektrode 27,28 und eine gemeinsame Mittelelektrode 13, so daß zwei Funkenstrecken zwischen den Außenelektroden 27,28 und der Mittelelektrode 13 entstehen. Das Blechteil 43 ist über eine Lötstelle 44 leitend mit einem metallischen Schieber 45 an einer nach unten weisenden Nase 46 verbunden, die in einem Führungsschlitz 81 der Leiterplatte 41 geführt ist. Der Schieber 45 liegt mit Kontaktnoppen 47,48, von denen im Schnitt nach Fig. 6 nur einer sichtbar ist, auf der Leiterplatte 41 auf und wird an seiner, dem Überspannungsableiter 42 zugewandten Seite mittels einer Feder 88, die auf einer Führungsnase 49 aufgebracht ist, mit einer Federspannung beaufschlagt. Die Feder 88 stützt sich auf der gegenüberliegenden Seite an einer inneren Gehäusewand 50 ab, die zusammen mit einer inneren Gehäusedecke 51 und der in Fig. 6 linken Querwand 52 des Gehäuses 40 einen Hohlraum 107 zur Aufnahme des Überspannungsableiters 42 bildet, der von den Wänden 50, 52 und der Gehäusedecke 51 umfaßt ist. Der Schieber 45 ist an seiner Oberseite von einem als federndes Element ausgebildeten Erdblech 53 kontaktiert. Dieses führt in eine Aussparung 55, die aus der inneren Gehäusedecke 51 und der äußeren Gehäusedecke 29 des Gehäuses 40 gebildet ist, die zur äußeren Querwand 52 des Gehäuses 40 hin offen ist und zur Aufnahme eines Erdsteckers bzw. einer Erdschiene 98 dient. Zum sicheren Kontaktieren ist das Erdblech 53 in der Aussparung 55 mit einer Federzunge 54 versehen.

Der den Umschalter 9 bildende Schieber 45 hat an seiner, der Feder 88 entgegengesetzten Seite eine Signalisierungsnase 56, die bei ausgelöster Sicherungsfunktion durch eine Aussparung 87 der rechten Gehäusequerwand 57 hindurchgreift. In dieser ist eine weitere Aussparung 58 vorgesehen, die durch die Leiterplatte 41 begrenzt wird. Diese Aussparung 58 dient zur Aufnahme eines nicht dargestellten Meß- und Trennsteckers und enthält Federzungen 59, 60, die im Normalzustand, d.h. wenn kein Meß- und Trennstecker eingeführt ist, die Leiterplatte 41 kontaktieren.

Die Fig. 7 zeigt die Leiterplatte 41, welche ein Teil des Gehäuses 40 des Schutzsteckers 99 bildet und an ihrem linken Ende als Kontaktzunge 61 ausgebildet ist. Auf der dargestellten Seite der Leiterplatte 41 sind Kontaktflächen 62,64 ausgebildet, die zur Kontaktierung der linienseitigen Anschlüsse a,b dienen und die in außen liegende Leiterbahnen 63,65 übergehen. Auf der anbgewandten Seite der Leiterplatte 41 sind ebensolche, nicht dargestellten Kontaktflächen zum Kontaktieren der systemseitigen Anschlüsse a′,b′ vorhanden. Diese werden durch die Durchkontaktierungen 66,68 mit den Leiterbahnen 67,69 verbunden, die innen parallel zu den Leiterbahnen 63,65 verlaufen. In den eingehenden Leiterbahnen 63,65 befinden sich Verjüngungen 70,71, welche die Sicherungen 3,4 bilden.

Die Leiterbahnen 63,65,67,69 enden auf der der Kontaktzunge 61 entgegengesetzten Seite der Leiterplatte 41 jeweils in einer rechteckförmigen, länglichen Kontaktzone 72,73,74,75. In den Kontaktzonen 72,75 sind je zwei Bohrungen 76,77 bzw. 78,79 vorgesehen. Diese Bohrungen 76 bis 79 dienen zur Aufnahme von senkrecht stehenden Kontaktblechen 96,97. Etwa in der Mitte der Leiterplatte 41 ist eine Vertiefung 80 zur Aufnahme des Blechteiles 43 vorgesehen. Ferner ist ein Führungsschlitz 81 vorhanden, der von der Vertiefung 80 zu der der Kontaktzunge 61 abgewandten Seite der Leiterplatte 41 zeigt und zur Aufnahme der Nase 46 des Schiebers 45 dient. Die Aufsetzpunkte 82,83 markieren die Auflagepunkte der Kontaktnoppen 47,48 des Schiebers 45 im Betriebszustand. Diese liegen im Bereich der Aussparungen der als Sicherungen 3,4 dienenden Verjüngungen 70,71 der Leiterbahnen 63,65. Daher haben die Kontaktnoppen 47,48 im Betriebszustand keinen Kontakt mit den Leiterbahnen 63,65. Die Kontaktpunkte 84,85, die sich auf den Kontaktzonen 72,75 befinden, markieren die Lage der Kontaktnoppen 47,48 bei ausgelöster Funktion der Sicherungen 3,4.

Die Sicherungsfunktion der Schutzschaltung wird durch das Aufschmelzen der Lötstelle 44 ausgelöst, die den Schieber 45 mit dem Kontaktblech 43 des Überspannungsableiters 42 verbindet. Das Kontaktblech 43 sorgt dabei für engen thermischen Kontakt. Das Aufschmelzen der Lötstelle 44 bewirkt, hervorgerufen durch die Federkraft der vorgespannten Feder 88, eine Bewegung des Schiebers 45. Dieser bewegt sich dabei vom Überspannungsableiters 42 weg und trennt den Kontakt des Überspannungsableiters 42 mit dem Erdblech 53 auf. Die Kontaktnoppen 47,48 verlassen dabei ihre nicht kontaktierenden Aufsetzpunkte 82,83 und ruhen nach der Bewegung auf den Kontaktpunkten 84,85. Somit ist ein direkter Kurzschluß zwischen dem Erdblech 53 und den Leiterbahnen 63,65 hinter den die Sicherungen 3,4 bildenden Verjüngungen 70,71 hergestellt. Die Signalisierungsnase 56 zeigt aus der Aussparung 87 in der Querwand 57 heraus. Ihre Wirkung wird später noch näher erläutert.

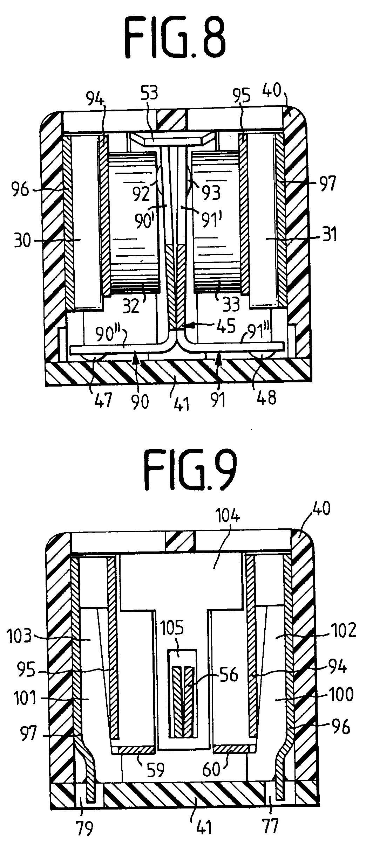

Die Figur 8 zeigt einen Schnitt durch den Schutzstecker 99 längs der Schnittebene A-B in Fig. 6. Der Schutzstecker 99 wird vom Gehäuse 40 und der Leiterplatte 41 umschlossen. Der Schieber 45 besteht aus zwei metallischen L-förmigen Schieberteilen 90,91, die derart zu einem T-Stück zusammengefügt sind, daß die langen Schenkel 90′, 91′, die den Steg des T-Stückes bilden, gegeneinander verspannt sind und eine spitzwinklige, V-förmige Feder bilden. An den jeweiligen Enden der kurzen Schenkel 90′′, 91′′, die den Flansch des T-Stückes bilden, befinden sich die auf der Leiterplatte 41 aufliegenden Kontaktnoppen 47,48. Der den Umschalter 9 bildende Schieber 45 wird von oben mittels der Federkraft des Erdbleches 53 kontaktiert.

An jeder Seite der langen Schenkel 90′,91′ der Schieberteile 90,91 sind jeweils von innen nach außen ein scheibenförmiger Varistor 32,33, ein Trennkontaktblech 94,95, ein PTC-Widerstand 30,31 und ein äußeres Kontaktblech 96,97 angeordnet, wobei die Kontaktnoppen 92,93 mittels des Federdruckes der langen Schenkel 90′,91′ des Schiebers 45 auf die Varistoren 32,33 drücken und diese somit elektrisch kontaktieren. Die Kontaktnoppen 92,93 befinden sich auf der Innenseite der langen Schenkel 90′,91′ der L-förmigen Schieberteile 90,91. Die PTC-Widerstände 30,31 haben eine rechteckige und die Varistoren 32,33 eine zylindrische Form, wobei deren Höhe geringer als der Durchmesser ist. Jeweils ein Varistor 32,33 und ein PTC-Widerstand 30,31 sind an ihrer Grundfläche mittels eines Trennkontaktbleches 94,95 elektrisch verbunden. Bedingt durch diese großen Kontaktflächen ist der thermische Kontakt ebenfalls sehr gut.

Der in Fig. 9 dargestellte Querschnitt durch den Schutzstecker 99 längs der Linie C-D in Fig. 6 zeigt das Gehäuse 40 mit der Leiterplatte 41. An den inneren Seitenwänden des Gehäuses 40 schmiegen sich die Kontaktbleche 96,97 an, von denen das Kontaktblech 96 mittels der Bohrungen 76,77 senkrecht in die Leiterplatte 41 und das Kontaktblech 97 senkrecht in die Bohrungen 78,79 eingelötet sind. Nach innen schließen sich die Hohlräume 100,101 an, die den linken und rechten PTC-Widerstand 30,31 aufnehmen. Innen folgen die Trennkontakbleche 94,94, welche die PTC-Widerstände 30,31 mit den Varistoren 32,33 elektrisch verbinden. Nachfolgend schließen sich die Aufnahmeräume 102,103 zur Aufnahme der Varistoren 32,33 an. Mittig ist die Signalisierungsnase 56 des Schiebers 45 dargestellt. Zwischen den Aufnahmeräumen 102,103 für die Varistoren 32,33 und der Leiterplatte 41 befinden sich die Federzungen 59,60 der Meß-und Trennkontakte. Die Hohlräume 100,101 zur Aufnahme der PTC-Widerstände 30,31 und die Aufnahmeräume 102,103 zur Aufnahme der Varistoren 32,33, der Trennkontaktbleche 94,95 und der Federkontaktzungen 59,60 sind in einem entsprechend geformten Formkörper 104 ausgebildet, der an seiner Vorderseite eine weitere Aussparung 105 zur Durchführung der Signalisierungsnase 56 des Schiebers 45 aufweist.

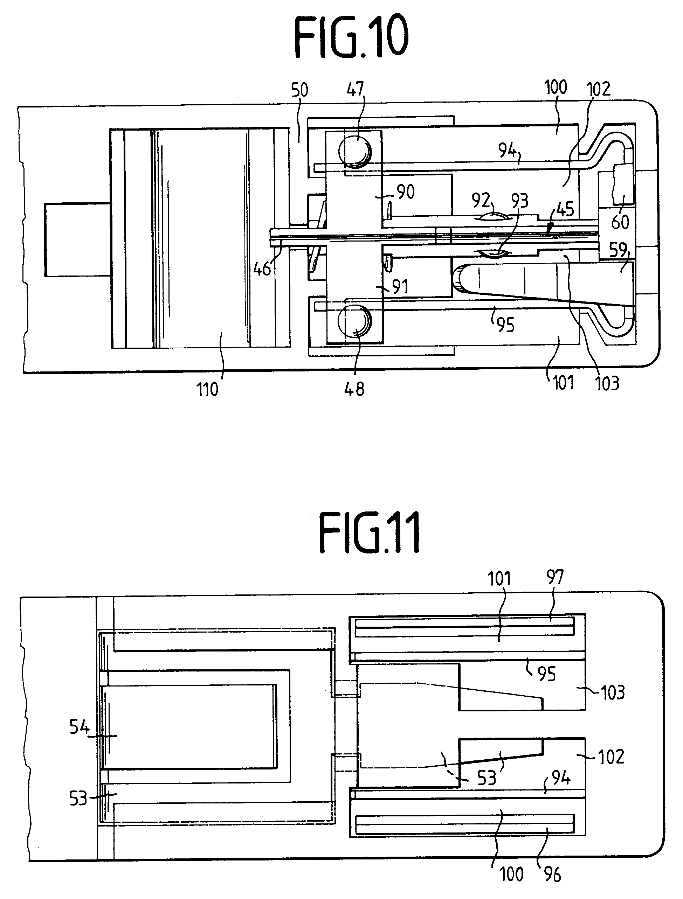

In der Figur 10 ist eine Untersicht des Schutzsteckers 99 bei abgenommener Leiterplatte 41 dargestellt. Die Kontaktfederzungen 59,60, die zur Kontaktierung auf den Kontaktzonen 73,74 der Leiterplatte 41 dienen, sind mit jeweils einem der Trennkontaktbleche 94,95 fest verbunden. Somit sind die Verbindungen zwischen den linienseitigen Anschlüssen a,b und den systemseitigen Anschlüssen a′,b′über die PTC-Widerstände 30,31 ohne den Einsatz eines Meß-und Trennsteckers hergestellt. Die Figur 10 zeigt ferner die Hohlräume 100,101 und die Aufnahmeräume 102,103 zur Aufnahme der PTC-Widerstände 30,31 bzw. der Varistoren 32,33. Mittig ist der Schieber 45 mit den Kontaktnoppen 92,93 angeordnet, dessen Flanschseite aus den kurzen Schenkeln 90′′,91′′ gebildet ist. An deren Enden sind unterseitig die Kontaktnoppen 47,48 angebracht. Die Führungsnase 49 der Druckfeder 88 ragt durch die innere Gehäusewand 50 hindurch. Auf der anderen Seite der Gehäusewand 50 befindet sich der Aufnahmeraum 107 zur Aufnahme des Dreipol-Überspannungsableiters 42.

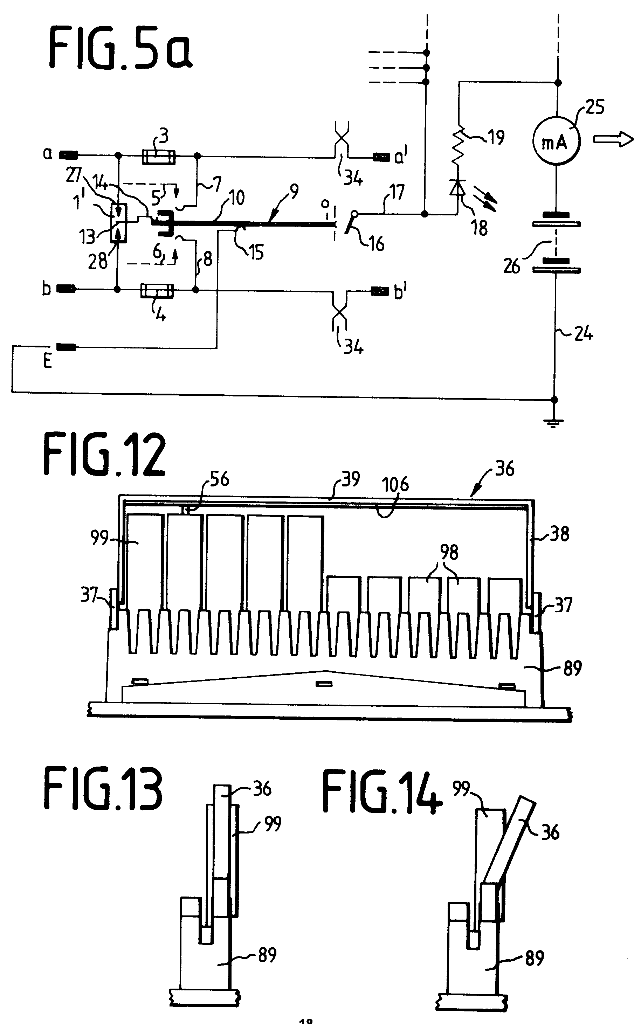

Die Figur 11 zeigt eine Draufsicht auf den Schutzstecker 99. Dargestellt sind die Kontaktbleche 96,97, die Trennkontaktbleche 94,95 mit den dazugehörigen Hohlräumen 100,101 und Aufnahmeräumen 102,103 zur Aufnahme der PTC-Widerstande 30,31 bzw. der Varistoren 32,33. Das Erdblech 53 ragt teilweise über die Hohl-und Aufnahmeräume 100 bis 103 und über den Aufnahmeraum 107 des Überspannungsableiters 42 mit der Federzunge 54 hinaus. Diese dient zur Kontaktierung mit der Erdschiene 98 wie es nachfolgend näher beschrieben werden wird.

Anstelle der Varistoren 32,33 sind spannungsbegrenzende Halbleiterbauelemente eingesetzt werden. Die Varistoren, die Dioden und die anderen Bauelemente können zur Typveränderung in der Produktion verändert werden (Modularer Aufbau).

Die Figur 12 zeigt eine Anschlußleiste 89 der Fernmeldetechnik mit fünf aufgesteckten Schutzsteckern 99 und einer Erdschiene 98. An den beiden Stirnseiten der Anschlußleiste 89 ist ein U-förmiger Signalbügel 36 über Schwenklager 37 gelagert. Die Schenkel 38 des Signalbügels 36 sind etwas länger als die Höhe der eingesteckten Schutzstecker 99 über der Anschlußleiste 89. Der Verbindungssteg 39 des Signalbügels 36 befindet sich daher im Wirkungsbereich der ausgelösten Signalisierungsnasen 56 der Schutzstecker 99. Auf der Innenseite des langen Verbindungssteges 39 des Signalbügels 36 befindet sich ein elektrischleitender Kontaktstreifen 106, der über die in Fig. 5 a dargestellte Anschlußleitung 17 an das zentrale Signalisierungssystem angeschlossen ist. Die Figur 13 zeigt die Stirnansicht der Anschlußleiste 89 mit darauf befindlichem Signalbügel 36 im Betriebszustand. Die Figur 14 zeigt die Stirnansicht gemäß Fig. 13 mit abgeklappten Signalbügel 36, um so die Schutzstecker 99 auswechseln zu können und einen leichteren Zugang zum Meß-und Trennkontakt zu ermöglichen. Das Abklappen des Signalbügels 36 ist erforderlich, da sonst die Schutzstecker 99 nicht gezogen werden können. Das Abklappen des Signalbügels 36 ist auch in die andere Richtung als in Fig. 14 dargestellt möglich, falls auf der einen Seite der Anschlußleiste 89 befindliche weitere Anschlußleisten 89 mit aufgesteckten Schutzstecker 99 das Abklappen behindern.

In der Fig. 12 ist ein Schutzstecker 99 mit herausragender Signalisierungsnase 56 dargestellt. Das heißt infolge einer Störung mit nachfolgender Erwärmung hat sich die Lötstelle 44 entlötet und der Schieber 45 des Schutzsteckers 99 ist unter der Wirkung der Feder 88 aus dem Gehäuse 40 herausgedrückt worden. Die optische Signalisierungsnase 56 berührt nun den Kontaktstreifen 106 und schließt den Signalstromkreis gemäß dem in Fig. 5a gezeigten Schaltbild gegen den Erdleiter E. Es ist auch als zusätzliche Signalisierung denkbar, den Signalstromkreis gemäß 5a über den Erdleiter E auch dann zu schließen, wenn der Signalbügel 36 gemäß Fig. 14 abgeklappt ist. Dies würde ein unzulässiges Ausschalten der Signalisierung durch Abklappen des Signalbügels 36 verhindern, d.h. es wird bereits beim Abklappen des Signalbügels 36 durch einen nicht gezeigten Kontakt ein Signal gegeben. Der Signalbügel 36 selbst kann auch ein Signalelement enthalten, z.B. LED, eine Lampe o.dgl., um das Auffinden des Fehlers zu erleichtern.

## Patentansprüche

1. Schutzschaltung zum Schutz eines Verbrauchers vor Überspannung und Überstrom, insbesondere für Telekommunikationsanlagen, mit einer in die Leitungsverbindung (a,a′, b,b′) geschalteten Sicherung ( 3,4 ) und einem durch ein Thermo-Schutzelement ( 5,6 ) geschützten, einen Querpfad zwischen der Leitungsverbindung (a,a′, b,b′) und dem Erdleiter ( E ) bildenden Überspannungsableiter ( 1,2 ), wobei ein Ansprechen des Thermo-Schutzelementes ( 5,6 ) ein Auftrennen des Querpfades des Überspannungsableiters bewirkt,
**dadurch gekennzeichnet**,
daß der Querpfad des Überspannungsableiters ( 1,2 ) bezüglich der Richtung Linienseite-Systemseite (L-S) vor der Sicherung ( 3,4 ) angeordnet ist und daß das Ansprechen des Thermo-Schutzelementes ( 5,6 ) ein Schließen eines Kurzschluß-Querpfades ( 7,8 ) hinter der Sicherung ( 3,4 ) zwischen der Leitungsverbindung (a,a′, b,b′) und dem Erdleiter ( E ) bewirkt.

2. Schutzschaltung zum Schutz eines Verbrauchers vor Überspannung und Überstrom, insbesondere für Telekommunikationsanlagen, mit einer in die Leitungsverbindung (a,a′, b,b′) geschalteten Sicherung ( 3,4 ) und einem durch ein Thermo-Schutzelement ( 5,6 ) geschützten, einen Querpfad zwischen der Leitungsverbindung (a,a′, b,b′) und dem Erdleiter ( E ) bildenden Überspannungsableiter ( 1,2 ), wobei ein Ansprechen des Thermo-Schutzelementes ( 5,6 ) ein Auftrennen des Querpfades des Überspannungsableiters bewirkt, dadurch gekennzeichnet, daß der Querpfad des Überspannungsableiters ( 1,2 ) bezüglich der Richtung Linienseite-Systemseite (L-S) hinter der Sicherung ( 3′,4′ ) angeordnet ist, daß das Ansprechen des Thermo-Schutzelementes ( 5,6 ) ein Schließen eines Kurzschlußquerpfades ( 7,8 ) zwischen der Leitungsverbindung (a,a′, b,b′) und dem Erdleiter ( E ) hinter dem Querpfad des Überspannungsleiters ( 1,2 ) bewirkt und daß die Sicherung ( 3′,4′ ) mit einem Schalter ( 11 ) überbrückt ist, der beim Abtrennen des Querpfades des Überspannungsableiters ( 1,2 ) geöffnet ist.

3. Schutzschaltung nach einem der Ansprüche 1 oder 2, dadurch gekennzeichnet, daß die Schutzschaltung zur Sicherung zweier Leitungsverbindungen (a,a′ ;b,b′) einer Doppelader symmetrisch verdoppelt ist, wobei beim Ansprechen eines Thermo-Schutzelementes ( 5,6 ) über einen gemeinsamen Umschalter ( 9 ) beide Überspannungsableiter ( 1,2 ) von dem Erdleiter ( E ) abgetrennt und beide Kurzschluß-Querpfade ( 7,8 ) geschlossen werden.

4. Schutzschaltung nach einem der Ansprüche 1 bis 3, dadurch gekennzeichnet, daß ein Feinschutz ( 21 ) zur Erzielung eines Stufenschutzes aus Grobschutz ( 20 ) und Feinschutz ( 21 ) in die Leitungsverbindung (a,a′;b,b′) geschaltet ist.

5. Schutzschaltung nach Anspruch 4, dadurch gekennzeichnet, daß der Feinschutz ( 21 ) einen in die Leitungsverbindung (a,a′;b,b′) geschalteten PTC-Widerstand (30,31) und einen dazu quer zwischen der Leitungsverbindung (a,a′;b,b′) und dem Erdleiter (E) geschalteten Varistor ( 32,33 ) umfaßt, der mit dem PTC-Widerstand ( 30,31 ) wärmemäßig eng gekoppelt ist.

6. Schutzschaltung nach Anspruch 5, dadurch gekennzeichnet, daß dem Stufenschutz in jeder Leitungsverbindung eine Meß- und Trennstelle ( 34 ) nachgeordnet ist.

7. Schutzstecker mit einer Schutzschaltung nach einem oder mehreren der Ansprüche 3 bis 6, dadurch gekennzeichnet, daß der Umschalter ( 9 ) als innerhalb eines Gehäuses ( 40 ) gelagerter Schieber ( 45 ) ausgebildet ist, dessen eines Ende über eine Lötstelle ( 44 ) mit dem Erdblech ( 43 ) eines innerhalb des Gehäuses ( 40 ) festgelagerten Überspannungsableiters ( 42 ) verbunden ist, der in vom Überspannungableiter ( 42 ) weggerichteter Richtung unter Federspannung steht und an einem Erdblech ( 53 ) gleitbar anliegt, und daß der Schieber ( 45 ) Kontaktnoppen ( 47,48 ) aufweist, die im Betriebszustand kontaktlos sind und die nach dem Durchschmelzen der Lötstelle ( 44 ) unter Wärmeeinwirkung und dem daraus resultierenden Verschieben des Schiebers ( 45 ) unter der Federspannung die Stromleitungen kontaktieren und auf Erdpotential ( E ) schalten.

8. Schutzstecker nach Anspruch 7, dadurch gekennzeichnet, daß der Schieber ( 45 ) aus zwei im Querschnitt L-förmigen Schieberteilen ( 90,91 ) gebildet ist, die derart T-förmig zusammengefügt sind, daß die beiden, den Steg bildenden langen Schenkel ( 90′,91′ ) etwas gegeneinander verschränkt sind, so daß eine V-förmige Feder gebildet ist, und daß an der Außenseite der den Flansch bildenden kurzen Schenkel ( 90′′,91′′ ) jeweils eine Kontaktnoppe ( 47,48 ) und an der Innenseite der den Steg bildenden langen Schenkel ( 90′,91′) nach außen gerichtete Kontaktnoppen ( 92,93 ) angebracht sind.

9. Schutzstecker nach Anspruch 8, dadurch gekennzeichnet, daß das Gehäuse ( 40 ) auf einer Seite mit einer Leiterplatte ( 41 ) abgeschlossen ist, die an ihrem einen Ende als über das Gehäuse ( 40 ) herausragende Kontaktzunge ( 61 ) ausgebildet ist, die beidseitig aufgebrachte Kontaktstellen ( 62,64 ) und auf der der Innenseite des Gehäuses ( 40 ) zugewandten Seite Leiterbahnen ( 63,65,67,69 ) aufweist.

10. Schutzstecker nach Anspruch 9, dadurch gekennzeichnet, daß die Sicherungen ( 3,4 ) auf der Leiterplatte ( 41 ) als Verjüngungen ( 70,71 ) der jeweiligen Leiterbahnen ( 63,65 ) ausgebildet sind.

11. Schutzstecker nach einem der Ansprüche 6 bis 10, dadurch gekennzeichnet, daß der Schieber ( 45 ) eine in Richtung der Querseite ( 57 ) des Gehäuses ( 40 ) zeigende Signalisierungsnase ( 56 ) aufweist, die nach dem Auslösen des Sicherungszustandes durch eine Aussparung ( 87 ) des Gehäuses ( 40 ) nach außen austritt und ein Signalisierungsignal anzeigt.

12. Schutzstecker nach einem der Ansprüche 6 bis 11, dadurch gekennzeichnet, daß sich beidseits des mittig im Gehäuse ( 40 ) angeordneten Schiebers ( 45 ) jeweils ein Varistor ( 32, 33 ), ein Kontaktblech ( 94, 95 ) ein PTC-Widerstand ( 30, 31 ) und ein äußeres Kontaktblech ( 96, 97 ) befinden, die sämtlichst elektrisch miteinander verbunden sind.

13. Schutzstecker nach einem der Ansprüche 6 bis 12, dadurch gekennzeichnet, daß an der der Kontaktzunge ( 61 ) zugewandten Querwand ( 52 ) des Gehäuses ( 40 ) eine Öffnung ( 55 ) zur Einführung einer Erdschiene ( 98 ) vorgesehen ist, die im Inneren des Gehäuses ( 40 ) mittels einer Feder ( 54 ) kontaktierbar ist.

14. Schutzstecker nach einem der vorangegangenen Ansprüche, dadurch gekennzeichnet, daß an der der Signalisierungsnase ( 56 ) zugewandten Gehäusewand ( 57 ) eine Öffnung ( 58 ) vorgesehen ist, durch die ein Meß- und Trennstecker einführbar ist, der im Inneren des Gehäuses ( 40 ) einen Federkontakt ( 59, 60 ), der die einkommende Leiterbahn ( 63, 65 ) hinter dem PTC-Widerstand ( 30, 31 ) mit der abgehenden Leiterbahn ( 67, 69 ) verbindet, von der abgehenden Leiterbahn abhebt.

15. Schutzstecker nach einem der vorangegangenen Ansprüche, dadurch gekennzeichnet, daß ein Signalbügel ( 36 ) vorgesehen ist, der in einem kleinen Abstand zur stirnseitigen Querwand ( 57 ) des Schutzsteckers ( 99 ) angeordnet ist und der von der Signalisierungsnase ( 56 ) des Schutzsteckers ( 99 ) kontaktierbar ist, wobei der Signalbügel ( 36 ) mit einem Kontaktstreifen ( 104 ) zur Abgabe eines Signales an einer Signalisierungseinrichtung versehen ist.

16. Schutzstecker nach Anspruch 15, dadurch gekennzeichnet, daß der Signalbügel ( 36 ) U-förmig ausgebildet und mit seinen Schenkeln ( 38 ) über Schwenklager ( 37 ) abklappbar an einer Anschlußleiste ( 89 ) angeordnet ist.

## Claims

1. A protective circuit for the protection of a user from overvoltage and overcurrent, in particular for telecommunication devices, comprising a fuse (3, 4) connected into the line connection (a, a′; b, b′) and a surge arrester (1, 2) protected by a heat-sensitive protection device (5, 6) and forming a cross path between the line connection (a, a′; b, b′) and the earth conductor (E), a response of the heat-sensitive protection device (5, 6) causing disconnection of the cross path of the surge arrester (1, 2), characterized by that the cross path of the surge arrester (1, 2) is arranged before the fuse (3, 4), relative to the direction line side-system side (L-S), and that the response of the heat-sensitive protection device (5, 6) causes a closure of a short-circuit cross path (7, 8) behind the fuse (3, 4) between the line connection (a, a′; b, b′) and the earth conductor (E).

2. A protective circuit for the protection of a user from overvoltage and overcurrent, in particular for telecommunication devices, comprising a fuse (3, 4) connected into the line connection (a, a′; b, b′) and a surge arrester (1, 2) protected by a heat-sensitive protection device (5, 6) and forming a cross path between the line connection (a, a′; b, b′) and the earth conductor (E), a response of the heat-sensitive protection device (5, 6) causing disconnection of the cross path of the surge arrester (1, 2), characterized by that the cross path of the surge arrester (1, 2) is arranged behind the fuse (3′, 4′), relative to the direction line side-system side (L-S), and that the response of the heat-sensitive protection device (5, 6) causes a closure of a short-circuit cross path (7, 8) between the line connection (a, a′; b, b′) and the earth conductor (E) behind the cross path of the surge arrester (1, 2), and that the fuse (3′, 4′) is bridged by a switch (11), which is disconnected when disconnecting the cross path of the surge arrester (1, 2).

3. A protective circuit according to one of claims 1 to 2, characterized by that the protective circuit for protecting two line connections (a, a′; b, b′) of a double conductor is symmetrically doubled, both surge arresters (1, 2) being disconnected, upon a response of a heat-sensitive protection device (5, 6), from the earth conductor (E) over a common change-over switch (9), and both short-circuit cross paths (7, 8) being closed.

4. A protective circuit according to one of claims 1 to 3, characterized by that a fine protection (21) for achieving a stage-type protection composed of coarse protection (20) and fine protection (21) is connected into the line connection (a, a′: b, b′).

5. A protective circuit according to claim 4, characterized by that the fine protection (21) comprises a FTC resistor (30, 31) connected into the line connection (a, a′; b, b′) and a varistor (32, 33) connected transversely thereto between the line connection (a, a′; b, b′) and the earth conductor (E), said varistor being thermally closely coupled to the FTC resistor (30, 31).

6. A protective circuit according to claim 5, characterized by that in each line connection, a measuring and disconnecting position (34) is connected in series behind the stage-type protection.

7. A protective module comprising a protective circuit according to one or several of claims 3 to 6, characterized by that the change-over switch (9) is adapted as a slider (45) supported in a housing (40), the one end of said slider being connected over a solder position (44) with the earth plate (43) of a surge arrester (42) rigidly held in the housing (40), said surge arrester being spring-loaded in a direction showing away therefrom and slidably resting against an earth plate (53), and that the slider (45) comprises contact projections (47, 48), which are contactless in the operating condition, and which contact the current lines after melting of the solder position (44) under heat influence and the thus effected displacement of the slider under spring action, and connect them to earth potential (E).

8. A protective module according to claim 7, characterized by that the slider (45) is formed of two slider portions (90, 91) having L-shaped cross sections, which are T-shapedly combined in such a manner that the two long legs (90′, 91′) forming the cross-piece are slightly pre-tensioned relative to each other, so that a V-shaped spring is formed, and that at the outside of the short legs (90′′, 91′′) forming the flange, one contact projection (47, 48) each is attached, and at the inside of the long legs (90′, 91′) forming the crosspiece, outwardly directed contact projections (92, 93) are attached.

9. A protective module according to claim 8, characterized by that the housing (40) is closed on one side by a circuit board (41), which is adapted at its one end as a contact tongue (61) projecting over the housing (40), said contact tongue comprising contact positions (62, 64) on either side, and circuit tracks (63, 65, 67, 69) on the side directed toward the inside of the housing (40).

10. A protective module according to claim 9, characterized by that the fuses (3, 4) on the circuit board (41) are adapted as narrow sections (70, 71) of the respective circuit tracks (63, 65).

11. A protective module according to one of claims 6 to 10, characterized by that the slider (45) comprises a signalling lug (56) showing in the direction of the transverse wall (57) of the housing (40), said signalling lug projecting, after tripping of the fuse, outwardly through an opening (87) of the housing (40), and providing tripping signal.

12. A protective module according to one of claims 6 to 11, characterized by that on either side of the slider (45) centrally extending in the housing (40), one varistor (32, 33), one contact plate (94, 95), one PTC resistor (30, 31) and one external contact plate (96, 97) each are provided, which are all electrically connected with each other.

13. A protective module according to one of claims 6 to 12, characterized by that at the transverse wall (52) of the housing (40) directed towards the contact tongue (61), an opening (55) for introducing an earth rail (98) is provided, which can be contacted in the interior of the housing (40) by means of a spring (54).

14. A protective module according to one of the preceding claims, characterized by that at the housing wall (57) directed toward the signalling lug (56), an opening (58) for introducing a measuring and disconnecting module is provided, which lifts off, in the interior of the housing (40), a spring contact (59, 60) connecting the incoming circuit track (63, 65) behind a PTC resistor (30, 31) with the outgoing circuit track (67, 69), from the outgoing circuit track (67, 69).

15. A protective module according to one of the preceding claims, characterized by that a signal bracket (36) is provided, which is disposed in a small distance from the front-side transverse wall (57) of the protective module (99), and which can be contacted by the signalling lug (56) of the protective module (99), the signal bracket (36) being provided with a contact strip (104) for supplying a signal to a signalling device.

16. A protective module according to claim 15, characterized by that the signal bracket (36) is U-shaped, and can be folded down with its legs (38) over pivot bearings (37) at a connector block (89).

## Revendications

1. Circuit de protection pour la protection d'un dissipateur contre les surtensions et les surcourants, en particulier pour dispositifs de télécommunication, comprenant un fusible (3, 4) inclus dans le conducteur de courant (a, a′, b, b′) et un éclateur déchargeur (1, 2) protégé par un élément de protection thermique (5, 6) et formant un chemin transversal entre le conducteur de courant (a, a′, b, b′) et le conducteur à la terre (E), une réponse de l'élément de protection thermique (5, 6) effectuant une coupure du chemin transversal de l'éclateur déchargeur,
caractérisé en ce que le chemin transversal de l'éclateur déchargeur (1, 2) est disposé par rapport à la direction côté de ligne-côté de système (L-S) en amont du fusible (3, 4), et que la réponse de l'élément de protection thermique (5, 6) effectue une fermeture d'un chemin transversal de court-circuitage (7, 8) en aval du fusible (3, 4) entre le conducteur (a, a′, b, b′) et le conducteur à la terre (E).

2. Circuit de protection pour la protection d'un dissipateur contre les surtensions et les surcourants, en particulier pour dispositifs de télécommunication, comprenant un fusible (3, 4) inclus dans le conducteur de courant (a, a′, b, b′) et un éclateur déchargeur (1, 2) protégé par un élément de protection thermique (5, 6) et formant un chemin transversal entre le conducteur de courant (a, a′, b, b′) et le conducteur à la terre (E), une réponse de l'élément de protection thermique (5, 6) effectuant une coupure du chemin transversal de l'éclateur déchargeur,
caractérisé en ce que le chemin transversal de l'éclateur déchargeur (1, 2) est disposé par rapport à la direction côté de ligne-côté de système (L-S) en aval du fusible (3′, 4′), et que la réponse de l'élément de protection thermique (5, 6) effectue une fermeture d'un chemin transversal de court-circuitage (7, 8) en aval du fusible (3′, 4′) entre le conducteur de courant (a, a′, b, b′) et le conducteur à la terre (E), et que le fusible (3′, 4′) est shunté par un interrupteur (11), qui est ouvert lors de la coupure du chemin transversal de l'éclateur déchargeur.

3. Circuit de protection selon une des revendications 1 ou 2,
caractérisé en ce que le circuit de protection est symétriquement doublé pour la protection de deux conducteurs de courant (a, a′; b, b′) d'un fil double, lors de la réponse d'un élément de protection thermique (5, 6) par l'intermédiaire d'un commutateur commun (9) les deux éclateurs déchargeurs étant séparés du conducteur à la terre (E) et les deux chemins transversaux de court-circuitage (7, 8) étant fermés.

4. Circuit de protection selon une des revendications 1 à 3,
caractérisé en ce qu'un dispositif de protection fin (21) pour obtenir une protection à gradins comprenant un dispositif de protection gros (20) et un dispositif de protection fin (21) est inclus dans le conducteur de courant (a, a′; b, b′).

5. Circuit de protection selon la revendication 4,
caractérisé en ce que le dispositif de protection fin (21) comporte une résistance CPT (30, 31) raccordée dans le conducteur de courant (a, a′; b, b′) et un varistor (32, 33) raccordé transversalement à celle-ci entre le conducteur de courant (a, a′; b, b′) et le conducteur à la terre (E), ledit varistor étant en couplage thermique étroit avec ladite résistance CPT.

6. Circuit de protection selon la revendication 5,
caractérisé en ce qu'en aval de la protection à gradins est prévu un point de mesure et de coupure (34).

7. Module de protection selon une ou plusieurs des revendications 3 à 6,
caractérisé en ce que le commutateur (9) est agencé sous la forme d'une coulisse (45) logée au-dedans d'un boîtier (40), une extrémité de laquelle étant connectée par l'intermédiaire d'un joint soudé (44) à la tôle (43) de mise à la terre d'un éclateur déchargeur (42) logé rigidement au-dedans du boîtier (40) qui est soumis à la force d'un ressort en une direction à l'écart de l'éclateur déchargeur (42) et portant en manière glissante contre une tôle (43) de mise à la terre, et que la coulisse (45) comporte des élévations de contact (47, 48), qui sont sans contact en état de marche et qui contactent les lignes de courant, après la fusion du joint soudé (44) sous l'influence de la chaleur et le déplacement résultant de la coulisse (45) sous la force de ressort et les commutent au potentiel de la terre (E).

8. Module de protection selon la revendication 7,
caractérisé en ce que la coulisse (45) consiste en deux pièces de coulisse (90, 91) ayant une coupe en L et qui sont assemblées de telle manière en T, que les deux branches longues (90′, 91′) formant la traverse soient légèrement croisées, de sorte qu'un ressort en V soit formé, et qu'à l'extérieur des branches courtes (90˝, 91˝) formant la bride sont respectivement disposées une élévation de contact (47, 48) et à l'intérieur des branches longues (90′, 91′) des élévations de contact (92, 93) dirigées vers l'extérieur.

9. Module de protection selon la revendication 8,
caractérisé en ce que le boîtier (40) est fermé à l'un côté par une carte imprimée (41), qui est agencée à l'un côté sous la forme d'une lame de contact (61) en saillie du boîtier (40), ladite lame de contact comprenant des points de contact (62, 64) disposés de part et d'autre et des pistes conductives (63, 65, 67, 69) sur le côté dirigé vers l'intérieur du boîtier (40).

10. Module de protection selon la revendication 9,
caractérisé en ce que les fusibles sont formés sur la carte imprimée (41) comme des contractures (70, 71) des pistes conductives (63, 65) respectives.

11. Module de protection selon une des revendications 6 à 10,
caractérisé en ce que la coulisse (45) comporte une came de signalisation (56) dirigée en la direction du côté transversal (57) du boîtier (40), qui après relâchement de l'état de sécurité sort vers l'extérieur à travers d'un évidement (87) du boîtier (40) et indique un signal de signalisation.

12. Module de protection selon une des revendications 6 à 11,
caractérisé en ce que de part et d'autre de la coulisse (40) disposée centralement dans le boîtier (40) se trouvent respectivement un varistor (32, 33), une tôle de contact (94, 95), une résistance CPT (30, 31) et une tôle de contact (96, 97) extérieure, qui sont tous connectés l'un à l'autre.

13. Module de protection selon une des revendications 6 à 12,
caractérisé en ce qu'à la paroi transversale (52) du boîtier (40) dirigée vers la lame de contact (61) est prévue une ouverture (55) pour l'introduction d'un rail (98) de mise à la terre, qui est contactable à l'intérieur du boîtier (40) au moyen d'un ressort (54).

14. Module de protection selon une des revendications précédentes,
caractérisé en ce qu'à la paroi (57) du boîtier dirigée vers la came de signalisation (56) est prévue une ouverture (58), à travers de laquelle une prise de mesure et de coupure peut être insérée, qui soulève à l'intérieur du boîtier (40) un contact de ressort (59, 60) connectant la piste conductive (63, 65) d'entrée en aval de la résistance CPT (30, 31) à la piste conductive (67, 69) de sortie, de la piste conductive de sortie.

15. Module de protection selon une des revendications précédentes,
caractérisé en ce qu'un étrier de signalisation (36) est prévu qui est disposé en une distance faible à la paroi transversale (57) frontale du module de protection (99) et qui peut être contacté par la came de signalisation (56) du module de protection (99), l'étrier de signalisation (36) étant pourvu d'une bande de contact (104) pour délivrer un signal à un dispositif de signalisation.

16. Module de protection selon la revendication 15,
caractérisé en ce que l'étrier de signalisation (36) est agencé en U et est disposé en manière rabattante avec ses branches (38) par l'intermédiaire de paliers pivotants (37) à une réglette de raccordement (89).
